(19) Europäisches Patentamt
European Patent Office
Office européen des brevets

(11) Publication number: 0 293 919
A2

(12) # EUROPEAN PATENT APPLICATION

(21) Application number: 88108923.9

(22) Date of filing: 03.06.88

(51) Int. Cl.4: C01B 25/45 , B01J 29/04 , B01J 27/16

(30) Priority: 04.06.87 US 58240

(43) Date of publication of application: 07.12.88 Bulletin 88/49

(84) Designated Contracting States: AT BE CH DE ES FR GB GR IT LI LU NL SE

(71) Applicant: UNION CARBIDE CORPORATION
39 Old Ridgebury Road
Danbury Connecticut 06817(US)

(72) Inventor: Lesch, David Allen
15 Clinton Avenue
Ossining New York 10562(US)
Inventor: Patton, Robert Lyle
87 Harris Road
Katonah New York 10536(US)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
D-8000 München 40(DE)

(54) **Solution synthesis of aluminophosphate crystalline compositions.**

(57) Aluminophosphate-containing microporous crystalline compositions are prepared by hydrothermal crystallization from aqueous solutions containing reactive sources of aluminum and phosphorus and organic templating agent.

EP 0 293 919 A2

## SOLUTION SYNTHESIS OF ALUMINOPHOSPHATE CRYSTALLINE COMPOSITIONS

This invention relates to processes for preparing microporous, crystalline aluminophosphate-containing compositions.

Microporous crystalline aluminophosphate-containing compositions having open framework structures formed of $AlO_2^{-1}$ and $PO_2^{+1}$ tetrahedral units joined by the sharing of the corner oxygen atoms and characterized by having pore openings of uniform dimensions have heretofore been disclosed in a number of publications. U.S. Patent No. 4,310,440, issued July 7, 1980, to S. T. Wilson, et al., discloses a generic class of non-zeolite molecular sieve materials which are capable of undergoing complete and reversible dehydration while retaining the same essential framework topology in both the anhydrous and hydrous state. By the term "essential framework topology" or "essential framework structure" as used in the aforesaid patent, and also in the present specification and claims, is meant the spacial arrangement of the primary Al-O and P-O bond linkages.

U.S. Patent No. 4,440,871, issued April 3, 1984, to B. M. Lok, et al., discloses crystalline silicoaluminophosphates having a three dimensional microporous crystal framework structure of $PO_2^{+1}$ , $AlO_2^{-1}$ and $SiO_2$ tetrahedral units.

U.S. Patent No. 4,500,651, issued February 19, 1985, to B. M. Lok, et al., discloses titanium-containing molecular sieves comprising a three dimensional microporous crystal framework of $TiO_2$, $AlO_2^{-1}$ and $PO_2^{+1}$ tetrahedral units.

U.S. Patent No. 4,554,143, issued November 19,1985, to C. A. Messina, et al., discloses crystalline microporous ferroaluminophosphate compositions containing as lattice constituents in addition to $AlO_2^{-1}$ and $PO_2^{+1}$ structural units, ferric and/or ferrous iron in tetrahedral coordination with oxygen atoms.

U.S. Patent No. 4,567,029, issued January 28, 1986, to S. T. Wilson, et al., discloses crystalline microporous metal aluminophosphate compositions containing as lattice constituents in addition to $AlO_2^{-1}$ and $PO_2^{+1}$ structural units, one or a mixture of two or more of the metals magnesium, manganese, cobalt and zinc in tetrahedral coordination with oxygen atoms.

European Patent Publication 0159624, published October 30, 1985, discloses crystalline microporous metal silicoaluminophosphate compositions containing as lattice constituents in addition to $SiO_2$ $AlO_2^{-1}$ and $PO_2^{+1}$ tetrahedral units, framework oxide units $ElO_2^n$ wherein n may be -3, -2, -1, 0 or +1 and El is at least one of arsenic, beryllium, boron, chromium, cobalt, gallium, germanium, iron, lithium. magnesium, titanium or zinc.

European Patent Publication 0161488, published November 21, 1985, discloses crystalline microporous titanium-containing molecular sieves comprising a three dimensional microporous crystalline framework of $TiO_2$, $SiO_2$, $AlO_2^{-1}$ and $PO_2^{+1}$ tetrahedral units.

European Patent Publication 0161491, published November 21, 1985, discloses crystalline microporous ferrosilicoaluminophosphate compositions containing as lattice constituents in addition to $SiO_2$, $AlO_2^{-1}$ and $PO_2^{+1}$ structural units, ferric and/or ferrous iron in tetrahedral coordination with oxygen atoms.

European Patent Publication 0158975, published October 23, 1985, discloses crystalline microporous zinc-containing molecular sieves having a three dimensional microporous crystalline framework containing in addition to $SiO_2$, $AlO_2^{-1}$ and $PO_2^{+1}$ structural units, zinc, in tetrahedral coordination with oxygen atoms.

European Patent Publication 0158348, published October 16, 1985, discloses crystalline microporous magnesium-containing molecular sieves having a three dimensional microporous crystalline framework containing in addition to $SiO_2$, $AlO_2^{-1}$ and $PO_2^{+1}$ structural units, magnesium in tetrahedral coordination with oxygen atoms.

European Patent Publication 0161490, published November 11, 1985, discloses crystalline microporous manganese-containing molecular sieves having a three dimensional microporous crystalline framework containing in addition to $SiO_2$, $AlO_2^{-1}$ and $PO_2^{+1}$ structural units, manganese in tetrahedral coordination with oxygen atoms.

European Patent Publication 0161489, published November 21, 1985, discloses crystalline microporous cobalt-containing molecular sieves having a three dimensional microporous crystalline framework containing in addition to $SiO_2$, $AlO_2^{-1}$ and $PO_2^{+1}$ and structural units, cobalt in tetrahedral coordination with oxygen atoms.

European Patent Publication 0158350, published October 16, 1985, discloses crystalline metal silicoaluminophosphate compositions containing as lattice constituents in addition to $SiO_2$, $AlO_2^{-1}$ and $PO_2^{-1}$ tetrahedral units, a mixture of two or more framework oxide units one $MlO_2^n$ wherein n is -3, -2, -1, 0 or +1 and Ml is at least two elements selected from the group of arsenic, beryllium, boron, chromium,

cobalt, gallium, germanium, iron, lithium, magnesium, manganese, titanium, vanadium and zinc.

European Patent Publication 0158976, published October 23, 1985, discloses crystalline metal aluminophosphate compositions containing as lattice constituents in addition to $AlO_2^{-1}$ and $PO_2^{+1}$ tetrahedral units, a mixture of two or more framework oxide units from two or more elements of the group of magnesium, manganese, cobalt and zinc.

European Patent Application 0158348, published October 16, 1985, discloses crystalline metal aluminophosphate compositions containing as lattice constituents in addition to $AlO_2^{-1}$ and $PO_2^{+1}$, framework oxide units of at least one element of the group of arsenic, beryllium, boron, chromium, gallium and lithium and when two or more different framework oxide units are present, the second and further element may be one of the aforementioned or at least one element selected from the group of iron, cobalt, magnesium, manganese, titanium and zinc.

E. M. Flanigen, et al., in "Aluminophosphate Molecular Sieves and the Periodic Table", a paper presented at the Seventh International Zeolite Association Conference, Tokyo, August 17 to 22, 1986, disclosed numerous microporous crystalline aluminophosphate-based compositions having various elements from the Periodic Table incorporated into the aluminophosphate framework. These elements include lithium, beryllium, boron, magnesium, silicon, titanium, manganese, iron, cobalt, zinc, gallium, germanium, vanadium, and arsenic. According to the authors, the materials may be classified into binary, ternary, quaternary, quinary and senary compositions based on the number of elements contained in the cationic framework sites of any given structure.

According to the authors, the aluminophosphate-based molecular sieves are synthesized by hydrothermal crystallization of reactive aluminophosphate-based gels containing the framework elements and an organic template at temperatures from 100° to 300° C. The authors note that the optimum crystallization temperature depends on composition and structure. The organic template is said to appear to play a critical structure-directing role. The template is trapped or clathrated in the structural voids as the crystals grow. The degree of template structural specificity varies according to the authors with some crystalline structures being prepared with as many as 23 templates to others in which only one template has yet been found suitable. Thus structure control may be exercised by other synthesis variables such as temperature, template concentration, gel oxide composition and pH. The authors note that the initial gel pH in most cases is weakly acidic to facilitate the successful incorporation of the elements into the frameworks and inhibiting their precipitation as various hydroxides or oxides.

Each of the above-mentioned patents, European Patent Publications and the article are herein incorporated by reference.

U.S. patent application Serial No. 058,258 (Atty. Docket D 15657), filed on even date herewith, by D. A. Lesch, et al., which is commonly assigned, discloses a microporous aluminophosphate crystalline composition designated as $AlPO_4$-34 which is prepared in accordance with the examples by a process in accordance with this invention.

In order to facilitate reference to aluminophosphate-containing crystalline compositions, shorthand references have been developed and have been extensively used in the art. However, for purposes of clarification the following acronyms describing framework composition will have the following meanings when used herein. The term "$AlPO_4$" shall mean aluminophosphate compositions. The term "SAPO" shall mean silicoaluminophosphates. The term "MeAPO" shall mean metal aluminophosphates wherein the metal is at least one of magnesium (MAPO), zinc (ZAPO), manganese (MnAPO), and cobalt (CoAPO). The term "MeAPSO" shall mean metal silicoaluminophosphates in which the metal is at least one of manganese, magnesium, cobalt and zinc (which may individually be referred to as MnAPSO, MAPSO, CoAPSO and ZAPSO, respectively. The term "FAPO" shall mean ferroaluminophosphate. The term "FAPSO" shall mean ferrosilicoaluminophosphate. The terms "ElAPO" and "ElAPSO" shall mean metalloaluminophosphates and metallosilicoaluminophosphates in which El represents the other elements. To identify the various structural species which make up each of the cases, each species is assigned a number and is identified, for example, SAPO-5 is a silicoaluminophosphate composition with the type 5 structure. The numbering of the structure type is arbitrary and bears no relationship to numbers used previously in the literature and only identifies structures found in the aluminophosphate-containing molecular sieves. The same structure number is used for a common structure type with varying framework composition. Thus $AlPO_4$-5 and ZAPO-5 have the same common structure type. Large pore structures have been identified as structure types -5, -36, -37, -40 and -46. Intermediate pore structure types include -11, -31, and -41. The structure types -14, -17, -18, -26, -33, -34, -35, -39, -42, -43, -44, and -47 are characterized as small pore whereas the -16, -20, -25 and -28 structural types are characterized as very small pore materials.

By this invention processes for the preparation of aluminophosphate-containing microporous crystalline compositions are provided in which the compositions are prepared from aqueous solutions containing

reactive sources of aluminum and phosphorus and an organic templating, i.e., structure-directing, agent.

The "solution" processes of this invention are distinguished from the heretofore used gel syntheses in which the reactants are dispersed as a suspension, slurry, or gel, i.e., a colloid in which the disperse phase has combined with the continuous phase to produce a viscous, jelly-like product. In contrast, substantially all of the reactive sources (including any metal ions to be incorporated into the aluminophosphate-containing framework structure) are dissolved or suspended in a very finely divided state in the aqueous medium and the solution is of a relatively low viscosity.

The "solution" synthesis of this invention can offer advantages over the gel synthesis techniques. Most notably, because of the nature of the solution, a highly uniform dispersion of the reactants and organic templating agent can often be obtained more readily than in a gel system. Compositional uniformity of the product molecular sieve may be enhanced by more uniform dispersion of the reactive materials in the mixture. In some instances, since the reactants are in the solution, the reactants are thought to possess greater reactivity and crystals may be formed at lower temperatures. However, it should be noted that because concentrations in the reaction mixtures of the reactants (especially alumina) are typically lower in the processes of this invention than in the gel synthesis methods, this increased reactivity may not directly translate into more rapid crystal formation per unit of reactants. Also, in some instances, the processes of this invention, due to the mechanism of the crystallization and the ease of migration of reactants in the reaction mixture, enable better control of the crystallization process and can facilitate the production, when desirable, of larger, smaller or more uniform crystals as compared to similar gel techniques for making the aluminophosphate-containing compositions.

In accordance with the processes of this invention, sufficient phosphorus source is provided in the reaction mixture such that the aluminum source is solubilized. Generally, the organic templating agent is provided in reaction mixture in a substantial excess of that required to provide the structure directing properties during the crystal synthesis. Often, the reaction mixture comprises, based on reactive components, and in addition to oxygen:

$aR:MI_x:Al_y:P_z:b\ H_2O$

wherein R is organic templating agent; MI represents one or more elements (provided by a reactive source for the element), if any, to be incorporated into the framework structure which are present in tetrahedral coordination with oxygen atoms; a is an amount great enough to constitute an effective concentration of R and is greater than 0 up to about 12 or more; x is an amount of from 0 to about 0.95; y is an amount from about 0.05 to 1.0; z is an amount of about 0.5 to 25; and b is an amount of about 20 to 1,000 or more, say, about 40 to 600. Often the ratio of P:Al is at least about 3, say, about 3 to 6. Often, at least about 1, preferrably about 3 to 6, moles of organic templating agent are provided per atom of the Al and any other metal (MI) used in the solution to form the crystalline product. Frequently, at least about 1, preferably, about 3 to 6, moles of organic templating agent are provided per atom of reactive aluminum provided by the aluminum source. The reaction mixture is maintained at elevated temperature, e.g., at least about 50° C, preferably about 75° C to 225° C, for sufficient time to provide the crystalline product, often between a few minutes and about 20 days or more, e.g., about 12 to 350 hours. The metals which constitute MI often comprise one or more of Li, Be, B, Mg, Mn, Si, Ti, Fe, Co, Zn, Ga, Ge, V and As.

Aluminophosphate-containing Molecular Sieves

The processes of this invention provide microporous crystalline aluminophosphate-containing compositions having a three dimensional crystal framework structure of $AlO_2^{-1}$ and $PO_2^{+1}$, optionally with $MIO_2^n$ units in which n is -3, -2, -1, 0 or +1. Representative of crystalline aluminophosphat-containing compositions are those having an essential empirical chemical composition, on an as synthesized and anhydrous basis, of:

$mR:(MI_dAl_eP_f)O_2$

wherein R represents at least one organic templating agent present in the intracrystalline pore systems; m represents the moles of R present per mole of structural oxide and has a value of from 0 to about 0.3, the maximum value in each case depending on the molecular dimensions of the templating agent and the available void volume of the pore system of the particular aluminophosphate involved; d, e, and f represent

the mole fractions of the one or more metals (Ml), aluminum and phosphorus, respectively, present as tetrahedral oxides, said mole fractions being such as they are within the pentagonal compositional areas defined by points A, B, C, D, and E of the ternary diagram which is Figure 1 of the drawings. The points A, B, C, D, and E represent the following values for d, e, and f:

TABLE I

| | Mole Fractions | | |
|---|---|---|---|
| Point | d | e | f |
| A | 0 | 0.6 | 0.4 |
| B | 0 | 0.4 | 0.6 |
| C | 0.39 | 0.01 | 0.6 |
| D | 0.98 | 0.01 | 0.01 |
| E | 0.39 | 0.6 | 0.01 |

When synthesized in accordance with the processes of the present invention, the minimum value of m in the formula above is often at least about 0.02. When a metal other than aluminum is also used in providing the tetrahedral units for the microporous crystal framework, one or more of the metals may be used so as to provide binary, ternary, quaternary, quinary or senary compositions. Most frequently, the metal is divalent or tetravalent; however, in certain instances, normally monovalent metals such as lithium or trivalent metals such as iron III and cobalt III can be employed. Illustrative of the aluminophosphate-containing compositions are $AlPO_4$, SAPO, MeAPO, (e.g., MAPO. MnAPO, CoAPO and ZAPO), FAPO, MeAPSO (e.g., MAPSO, MnAPSO, CoAPSO, and ZAPSO), FAPSO, BeAPO, BeAPSO, TAPO (T is titanium), TAPSO, GAPO (G is gallium), GAPSO, and the like. Various aluminophosphate-containing molecular sieves are set forth in Table II below.

Specific structural species include $AlPO_4$-18, $AlPO_4$-34, CoAPO-34, SAPO-34, MAPO-34, $AlPO_4$-5, $AlPO_4$-41, $AlPO_4$-11, $AlPO_4$-17, SAPO-20, SAPO-40 and SAPO-37.

TABLE II

| Structure Type | $AlPO_4$ | SAPO | MeAPO (Me = Co Fe,Mg Mn,Zn | MeAPSO (Me = Co,Fe,Mg,Mn,Zn) | ELAPO (EL = As,Be,B,Cr,Ga,Ge,Li,V,Ti) | ELAPSO (EL = As,Be,B,Cr,Ga,Ge,Li,V,Ti) |
|---|---|---|---|---|---|---|
| Large Pore | | | | | | |
| 5 | X | X | X | X | X | X |
| 36 | - | - | X | X | X | X |
| 37 | - | X | - | X | X | X |
| 46 | - | - | X | X | X | X |
| 50 | - | X | X | X | X | X |
| Intermediate Pore | | | | | | |
| 11 | X | X | X | X | X | X |
| 31 | X | X | X | X | X | X |
| 40 | X | X | X | X | X | X |
| 41 | X | X | X | X | X | X |
| Small Pore | | | | | | |
| 14 | X | X | X | X | X | X |
| 17 | X | X | X | X | X | X |
| 18 | X | X | X | X | X | X |
| 33 | X | X | X | X | X | X |
| 34 | X | X | X | X | X | X |
| 35 | - | X | X | X | X | X |
| 39 | X | X | X | X | X | X |
| 42 | - | X | - | - | X | X |
| 43 | - | X | X | X | X | X |
| 44 | - | X | X | X | X | X |
| 47 | - | - | X | X | X | X |
| Very Small Pore | | | | | | |
| 16 | X | X | X | X | X | X |
| 20 | X | X | X | X | X | X |

The aluminophosphate-containing compositions exhibit properties characteristic of molecular sieves and are capable of reversibly absorbing water and other molecular species. Many are capable of reversibly undergoing complete dehydration without loss or change in crystal structure. While it is believed that the aluminum and phosphorus and metal (if any) framework constituents are present in tetrahedral coordination with oxygen, it is theoretically possible that some minor fraction of these framework constituents are present in coordination with five or six oxygen atoms. Moreover, it is not necessarily the case that all of the aluminum and/or phosphorus and/or metal (if any) content of any given synthesized product could be part of the framework in the aforesaid type coordination with oxygen. Some of each constituent may be merely occluded or in some undetermined form and may or may not be structurally significant.

Synthesis Discussion

The aluminophosphate-containing compositions are prepared in accordance with the present invention by hydrothermal crystallization from a reaction mixture which is a solution and contains reactive sources of alumina and phosphate and metal (if any) and an organic templating agent. In preparing the solutions which are the reaction mixtures for the processes, it is essential that sufficient organic templating agent and phosphorus source be provided to substantially solubilize the aluminum source (if not in the initially prepared solution, then during the hydrothermal crystallization) in the aqueous solution. For instance, in Example 1, $AlPO_4$-5 is used as an aluminum source but is not initially dissolved. Yet, at the completion of the hydrothermal crystallization, $AlPO_4$-5 is not detected, evidencing solubilization during the hydrothermal crystallization. In general, this solubilization is achieved by providing sufficient reactive phosphorus in conjunction with the templating agent, temperature of the reaction mixture and the pH of the reaction mixture to effect the desired solubilization. It is usually the case that the phosphorus source is present in an amount significantly in excess of that on a mole ratio to alumina than that provided in the aluminophosphate product. Thus, the mole ratio of the phosphorus source (calculated as $P_2O_5$) to alumina source (calculated as $Al_2O_3$) is at least about 3, preferably between about 3 to 6 or more.

The presence of the organic templating agent has also been found to facilitate the solubilization of the alumina source. While the precise role of the templating agent is not fully understood, it is believed that it functions not only as structure-directing additive but also as a species to charge balance ions for the aluminum oxide and/or metal oxide tetrahedra not otherwise balanced by associated phosphate tetrahedra. The organic templating agent can also effect the pH of the reaction mixture. It has been found, in some instances, that if the reaction mixture is at too low a pH, a dense phase, rather than the desired microporous, product is formed. Consequently, the organic templating agent, in combination with any other pH modifiers, should be present in an amount sufficient to provide the reaction mixture the pH of at least about 4.0, preferably at least about 4.5, say between about 4.5 and 11. In the event that a pH modifier is employed in the reaction mixture, care should be taken to assure that no untoward reactions occur. Consequently, organonitrogen bases and the like are preferred.

For the sake of convenience, elevated solubilization temperatures are generally preferred such as, temperatures of at least about 50° C, say between about 75 and 250° C. The solubilization conditions may be the same or different than those required for the formation of the crystalline product. In some instances, it is desired to provide the solution at or near an "equilibrium" state. By the term "equilibrium" state it is meant that under the conditions of the reaction solution, substantially no crystalline product will form without the addition of additional aluminum and phosphorus sources. One mechanism for achieving an equilibrium state is to form a reaction solution and allow crystalline material to form and then separate the crystalline material from the liquor which will be used to form the desired aluminophosphate-containing crystalline material. However, it is not essential that the reaction mixture be at the point of precipitation in order to achieve the equilibrium solution. While not wishing to be restricted to theory, it is believed that in the equilibrium solution, associations may exist between the organic templating agent and the phosphorus and/or aluminum source which facilitate the formation of the molecular sieve when additional aluminum and phosphorus sources are introduced into the reaction mixture.

Frequently, the reaction is conducted in pressurized vessels, although it is possible to use ambient pressure in some instances. For the sake of convenience, autogenous pressure is normally employed. However, pressures of up to about 50 bar may be used. Preferably, the reaction vessel is lined with an inert material such as polytetrafluoroethylene. As with the gel synthesis technique, stirring or other moderate agitation of the reaction mixture and/or seeding the reaction mixture with seed crystals of the aluminophosphate-containing species to be produced or a topologically similar aluminophosphate-containing or aluminosilicate composition may facilitate the crystallization procedure. The reaction mixture is often

maintained at a temperature of between about 75 and 225° C, until the desired crystallization of the aluminophosphate-containing product is obtained. The product may be recovered by any convenient means such as decanting, centrifugation, or filtration.

In forming the reaction mixture from which the aluminophosphate-containing compositions are crystallized the organic templating agent can be any of those heretofore proposed for use in the synthesis of conventional zeolite aluminosilicates and microporous aluminophosphate-containing species. In general these compounds contain elements of Group VA of the Periodic Table of Elements, particularly nitrogen, phosphorus, arsenic and antimony, preferably N or P and most preferably N, which compounds also contain at least one alkyl or aryl group having from 1 to 8 carbon atoms. Representative nitrogen-containing compounds for use as templating agents are the amines and quaternary ammonium compounds, the latter being represented generally by the formula $R_4N^+$ wherein each R is an alkyl or aryl group containing from 1 to 8 carbon atoms. Polymeric quaternary ammonium salts such as $[(C_{14}H_{32}N_2)(OH)_2]_x$ wherein "x" has a value of at least 2 are also suitably employed. Both mono-, di- and triamines are advantageously utilized, either alone or in combination with a quaternary ammonium compound or other templating compound. Mixtures of two or more templating agents, (1) can produce mixtures of the desired aluminophosphate-containing species, or, (2) may show control of the course of the reaction by one templating species with the other templating species serving primarily to establish the pH conditions of the reaction mixture, or, (3) may produce an entirely different species not observed with either of the species alone. Representative templating agents include tetramethylammonium, tetraethylammonium, tetrapropylammonium or tetrabutylammonium ions (especially provided as hydroxides for pH control); di-n-propylamine; diisopropylamine; tripropylamine; triethylamine; triethanolamine; piperidine; cyclohexylamine; 2-methylpyridine; N,N-dimethylbenzylamine; N,N-dimethylethanolamine; choline; N,N′-dimethylpiperazine; 1,4-diazabicyclo (2,2,2) octane; N-methyldiethanolamine, N-methylethanolamine; N-methylpiperidine; 3-methylpiperidine; N-methylcyclohexylamine; 3-methylpyridine; 4-methylpyridine; quinculidine; N,N′-dimethyl-1,4-diazabicyclo (2,2,2) octane ion; di-n-butylamine, neopentylamine; di-n-pentylamine; isopropylamine; t-butylamine; ethylenediamine; pyrolidine; and 2-imidazolidone.

As will be readily apparent from the illustrative Examples set forth hereinafter, not every templating agent will direct the formation of every species of aluminophosphate-containing composition, i.e., a single templating agent may, with proper manipulation of the reaction conditions, direct the formation of several compositions, and a given composition may be capable of being produced using several different templating agents.

The most suitable phosphorus sources yet found for the present process are phosphoric acid, monoaluminum phosphate and crystalline or amorphous aluminaphosphates such as the $AlPO_4$ composition of U.S. Patent No. 4,310,440, but organic phosphates such as triethyl phosphate may also be suitable. Organo-phosphorus compounds, such as tetrabutylphosphonium bromide do not, apparently serve as reactive sources of phosphorus, but these compounds do function as templating agents. Conventional phosphorus salts such as sodium metaphosphate, may be used, at least in part, as the phosphorus source, but are not preferred.

The preferred aluminum sources are crystalline or amorphous aluminophosphates, solutions of aluminum phosphate such as monoaluminum phosphate, aluminum alkoxides, such as aluminum isoproproxide, or pseudo-boehmite. The crystalline or amorphous aluminophosphates which are a suitable source of phosphorus are, of course, also suitable sources of aluminum. Other sources of aluminum used in zeolite synthesis, such as gibbsite, sodium aluminate and aluminum trichloride, can be employed but are not preferred.

An aspect of the invention which has found frequent use involves the addition of crystalline aluminophosphates such as $AlPO_4$-5 (such as disclosed in U.S. Patent No. 4,310,440) to a reaction solution which is at or near the "equilibrium" state. In general this additional source of aluminum and phosphorus frequently provides up to about 100 percent of the aluminum provided in the aluminophosphate-containing crystalline product. Analyses of the crystalline product have indicated that even though a different structural type of crystalline aluminophosphate is added to the reaction mixture, that crystal structure is, in some instances, not detected in the product and in others only found as a minor amount.

Any additional metals (MI) which are desired to be incorporated into the structural framework of the aluminophosphate-containing composition may be introduced into the reaction system in any form which permits the formation of reactive ions of the respective metals to form the metal oxide tetrahedra. The metals should not be introduced in a manner which adversely affects the ability of the reaction solution to produce the desired aluminophosphate-containing composition. Advantageously, salts, oxides or hydroxides of the metals are employed, such as chlorides, bromides, iodides, sulfates, acetates, formates, nitrates and the like.

After crystallization the aluminophosphate-containing product is isolated and advantageously washed with water and dried in air. The as-synthesized product contains within its internal pore system at least one form of the templating agent employed in its formation. Often the organic moiety is present, at least in part, as a charge-balancing cation as is generally the case with as-synthesized aluminosilicate zeolites prepared from organic-containing reaction systems. It is possible, however, that some or all of the organic moiety is an occluded molecular species in a particular aluminophosphate-containing species. As a general rule the templating agent, and hence the occluded organic species, is too large to move freely through the pore system of the product and must be removed by calcining the product at temperatures of 200 °C to 700 °C to thermally degrade the organic species. In a few instances the pores of the product are sufficiently large to permit transport of the templating agent, particularly if the latter is a small molecule, and accordingly complete or partial removal thereof can be accomplished by conventional desorption procedures such as carried out in the case of zeolites. It will be understood that the term "as-synthesized" as used herein and in the claims does not include the condition of the aluminophosphate-containing phase wherein the organic moiety occupying the intracrystalline pore system as a result of the hydrothermal crystallization process has been reduced by post-synthesis treatment such that the value of "m" in the composition formula

$mR : (MI_dAl_eP_f)O_2$

has a value of less than 0.02. The other symbols of the formula are as defined hereinabove. In those preparations in which an aluminum alkoxide is employed as the source of aluminum, the corresponding alcohol is necessarily present in the reaction mixture since it is a hydrolysis product of the alkoxide. It has not been determined whether this alcohol participates in the synthesis process as a templating agent. For the purposes of this application, however, this alcohol is arbitrarily omitted from the class of templating agents, even if it is present in the as-synthesized aluminophosphate-containing material.

Since the compositions are formed from $AlO_2^{-1}$, $PO_2^{+}$, and, optionally, $MIO_2^{n}$ tetrahedral units (derived from one or more metals, MI), the matter of cation exchangeability is considerably more complicated than in the case of zeolitic molecular sieves in which, ideally, there is a stoichiometric relationship between $AlO_2^{-}$ tetrahedra and charge-balancing cations. An $AlO_2^{-}$ tetrahedron can be balanced electrically either by association with a $PO_2^{+}$ tetrahedron or a simple cation such as an alkali metal cation, a cation of the metal(s) "MI" present in the reaction mixture, or proton ($H^{+}$), or an organic cation derived from the templating agent. Similarly, e.g., an $MIO_2^{-2}$ or $MIO_2^{-1}$ tetrahedron can be balanced electrically by association with $PO_2+$ tetrahedra, a cation of the metal "MI", organic cations derived from the templating agent, or other divalent or polyvalent metal cations introduced from an extraneous source.

It has also been postulated that nonadjacent $AlO_2^{-}$ and $PO_2+$ tetrahedral pairs can be balanced by $Na^{+}$ and $OH^{-}$ respectively [Flanigen and Grose, Molecular Sieve Zeolites-I, ACS, Washington, DC (1971)].

In any event, all of the aluminophosphate-containing compositions have uniform pore diameters which are inherent in the lattice structure of each species and which are at least about 3 Angstroms in diameter. Ion exchange is ordinarily possible only after the organic moiety present as a result of synthesis has been removed from the pore system. Dehydration to remove water present in the as-synthesized compositions can usually be accomplished, to some degree at least, in the usual manner without removal of the organic moiety, but the absence of the organic species greatly facilitates adsorption and desorption procedures.

The invention is illustrated by the following Examples. In each example the stainless steel reaction vessel, if utilized, was lined with the inert plastic material, polytetrafluoroethylene, to avoid contamination of the reaction mixture. In general, the final reaction mixture from which each aluminophosphate-containing composition is crystallized is prepared by forming mixtures of less than all of the reagents and thereafter incorporating into these mixtures additional reagents either singly or in the form of other intermediate mixtures of two or more reagents. In some instances the reagents admixed retain their identity in the intermediate mixture and in other cases some or all of the reagents are involved in chemical reactions to produce new reagents. The term "mixture" is applied in both cases. Further, unless otherwise specified, each intermediate mixture as well as the final reaction mixture was stirred until substantially homogeneous.

Where reaction products were subjected to X-ray analysis, the X-ray patterns were obtained using a standard X-ray powder diffraction technique or by the use of computer based techniques using a Siemens D-500 X-ray powder defractometer, available from Siemens Corporation, Cherry Hill, N.J. The radiation source was a high-intensity, copper target, X-ray tube operated at 40 Kv and 49 ma or 50 Kv and 40 ma. The diffraction pattern from the copper K radiation and graphite monochromator is suitably recorded by an X-ray spectrometer scintillation counter, pulse height analyzer and strip chart recorder. Flat compressed powder samples are scanned at 2° (2 theta) per minute, using a two second time constant. Interplanar

spacings (d) in Angstrom units are obtained from the position of the diffraction peaks expressed as $2\theta$ where $\theta$ is the Bragg angle as observed on the strip chart. Intensities were determined from the heights of diffraction peaks after subtracting background. "$I_o$" being the intensity of the strongest line or peak, and "I" being the intensity of each of the other peaks.

As will be understood by those skilled in the art the determination of the parameter 2 theta is subject to both human and mechanical error, which in combination, can impose an uncertainty of about $\pm 0.4^\circ$ on each reported value of 2 theta. This uncertainty is, of course, also manifested in the reported values of the d-spacings, which are calculated from the 2 theta values. This imprecision is general throughout the art and is not sufficient to preclude the differentiation of the present crystalline materials from each other and from the compositions of the prior art.

In certain instances hereinafter in the illustrative examples, the purity of a synthesized product is assessed with reference to its X-ray powder diffraction pattern. Thus, for example, if a sample of $AlPO_4$-18 is stated to be "pure $AlPO_4$-18", it is intended only that the X-ray pattern of the sample is free of lines attributable to crystalline impurities, not that there are no amorphous materials present.

The following examples are provided to illustrate the invention and are not to be construed as limiting thereof:

## ABBREVIATIONS USED

In the following examples the following abbreviations may be used:

a) LOI: Loss On Ignition;

b) $H_3PO_4$ : 85 weight percent aqueous phosphoric acid;

c) $Pr_2NH$: di-n-propylamine, $(C_3H_7)_2NH$;

d) TEFLON (polytetrafluoroethylene): is a trademark of E. I. du pont de Nemours & Co, Wilmington, DE, U.S.A.;

e) MAP: An aqueous solution containing 50 weight percent monoaluminum phosphate, $Al(H_2PO_4)_3$;

f) TEAOH: Tetraethylammonium hydroxide;

g) TPAOH: Tetrapropylammonium hydroxide;

h) TMAOH: Tetramethylammonium hydroxide pentahydrate, $((CH_3)_4NOH.5H_2O)$; and

i) $SiO_2$: Fumed silica (Cabosil), 94.5 weight percent $SiO_2$.

## Example 1

a) A reaction mixture was prepared by combining 51.8 grams of 85 wt. % orthophosphoric acid ($H_3PO_4$) and 130.8 grams of aqueous monoaluminum phosphate ($Al(H_2PO_4)_3$, 7.8 wt. % $Al_2O_3$, 32.8 wt. % $P_2O_5$), to which was added 368 grams of 39.3 wt. % aqueous tetraethylammonium hydroxide (TEAOH) and stirred until homogeneous. The composition of the final reaction mixture, in terms of molar oxide ratios was:

10.0 TEAOH : $Al_2O_3$ : 5.3 $P_2O_5$ : 177 $H_2O$.

A portion of the reaction mixture (274.6 grams) was sealed in a Teflon jar and was heated in an oven at 100° C. for 144 hours. The liquid was decanted and the remaining solids were washed with $H_2O$ and dried in ambient air. The 4.6 grams of solid obtained were analyzed by x-ray powder diffraction and found to be $AlPO_4$-18, as described in Example 46 of U.S. Patent No. 4,310,440. The decanted liquid was sealed in a Teflon jar and heated in an oven at 100° C. for 269 hours. 5.0 grams of calcined $AlPO_4$-5 was added to the hot reaction mixture, mixed until homogeneous, and heated at 100° C. for 71 hours to produce solids of $AlPO_4$-34. The $AlPO_4$-34 product was recovered by centrifugation, washed with $H_2O$, and dried in air at ambient temperature.

The calcined $AlPO_4$-5 employed above was prepared in a manner similar to that disclosed in Examples 1-26 of U.S. Patent No. 4,310,440 using 85% orthophosphoric acid, hydrated alumina (pseudo-boehmite phase), and tetraethylammonium hydroxide and tripropylamine as templates. Crystallization was effected in a stirred stainless steel autoclave at 150° C. and autogenous pressure. X-ray powder diffraction of the dried

product revealed $AlPO_4$-5 as the sole product. The as-synthesized $AlPO_4$-5 was calcined in air at 600° C. for 2.5 hours then was rehydrated at ambient conditions.

A portion of the 4.6 grams of dried $AlPO_4$-34 product was analyzed and the following chemical analysis obtained:

| | Weight Percent |
|---|---|
| Carbon | 10.8 |
| Nitrogen | 1.4 |
| $Al_2O_3$ | 28.5 |
| $P_2O_5$ | 46.7 |
| LOI | 25.5 |

The above chemical analysis corresponds to a product composition in molar oxide ratios of:

0.40 TEAOH : $Al_2O_3$ : 1.18 $P_2O_5$ : 1.77 $H_2O$

which corresponds to an empirical chemical composition (anhydrous basis) of:

0.092 TEAOH : $(Al_{0.46}P_{0.54})O_2$

The X-ray powder diffraction pattern of the $AlPO_4$-34 product was characterized by the data in the following table:

TABLE A

| 2 Θ | d (Å) | 100I/Io |
|---|---|---|
| 9.6 | 9.24 | 100 |
| 13.0 | 6.80 | 12 |
| 14.1 | 6.27 | 11 |
| 15.6 | 5.69 | 7 |
| 16.2 | 5.48 | 23 |
| 16.8 | 5.27 | 3 |
| 17.9 | 4.94 | 14 |
| 19.1 | 4.64 | 3 |
| 20.9 | 4.25 | 41 |
| 22.1 | 4.02 | 4 |
| 22.6 | 3.94 | 3 |
| 23.3 | 3.81 | 3 |
| 25.1 | 3.54 | 15 |
| 26.3 | 3.39 | 9 |
| 28.3 | 3.16 | 3 |
| 30.2 | 2.959 | 4 |
| 30.9 | 2.896 | 22 |
| 32.5 | 2.753 | 3 |
| 33.9 | 2.647 | 3 |
| 34.9 | 2.570 | 3 |
| 36.5 | 2.465 | 2 |
| 39.9 | 2.258 | 2 |
| 43.3 | 2.090 | 2 |
| 49.5 | 1.842 | 2 |
| 51.3 | 1.782 | 3 |

b) A portion of the $AlPO_4$-34 product obtained in part (a) was calcined in air by heating to 600° C at 31° C./hour and holding at 600° C. for 4.5 hours. After cooling to room temperature and rehydrating in

ambient air, the calcined solid had an X-ray powder diffraction pattern characterized by the data in the following table:

TABLE B

| 2 Θ | d (Å) | 100I/Io |
|---|---|---|
| 9.7 | 9.10 | 100 |
| 10.2 | 8.65 | 34 |
| 12.1 | 7.30 | 3 |
| 12.9 | 6.88 | 19 |
| 15.5 | 5.73 | 4 |
| 17.2 | 5.15 | 4 |
| 19.5 | 4.55 | 29 |
| 19.8 | 4.48 | 26 |
| 20.7 | 4.30 | 23 |
| 21.5 | 4.13 | 5 |
| 22.8 | 3.91 | 7 |
| 24.4 | 3.65 | 14 |
| 24.9 | 3.58 | 7 |
| 25.9 | 3.44 | 5 |
| 27.0 | 3.30 | 5 |
| 27.4 | 3.25 | 3 |
| 28.2 | 3.17 | 8 |
| 29.3 | 3.05 | 17 |
| 31.0 | 2.883 | 15 |
| 32.0 | 2.799 | 10 |
| 33.0 | 2.714 | 7 |
| 38.4 | 2.347 | 3 |
| 40.1 | 2.250 | 3 |
| 43.1 | 2.097 | 2 |
| 49.6 | 1.838 | 3 |
| 53.0 | 1.726 | 3 |

A portion of the calcined $AlPO_4$-34 was placed in a standard McBain-Bakr gravimetric adsorption apparatus and activated under vacuum at 350° C. overnight. Subsequent adsorption data were measured as listed in Table 2 below. Vacuum activations at 350° C. were performed between all adsorbate changes.

Table 2

| Adsorbate Molecule | Kinetic Diameter,(A) | Pressure (torr) | Temp. (° C) | Wt.% Adsorbed |
|---|---|---|---|---|
| $O_2$ | 3.46 | 106 | -183 | 21.8 |
| $O_2$ | 3.46 | 705 | -183 | 31.7 |
| isobutane | 5.0 | 704 | 23 | 0.9 |
| n-hexane | 4.3 | 44 | 22 | 9.7 |
| $H_2O$ | 2.65 | 4.6 | 22 | 24.9 |
| $H_2O$ | 2.65 | 19 | 23 | 37.0 |

These adsorption data indicate that the $ALPO_4$-34 product is a molecular sieve with a pore size of at least about 4.3 Angstroms but less than about 5.0 Angstroms.

## Example 2

a) A reaction mixture was prepared by combining 51.8 grams of 85 wt.% orthophosphoric acid ($H_3PO_4$) and 130.8 grams of aqueous monoaluminum phosphate ($Al(H_2PO_4)_3$, 7.8 wt.% $Al_2O_3$, 32.8 wt.% $P_2O_5$), to which was added 368 grams of 39.3 wt.% tetraethylammonium hydroxide (TEAOH) and stirred until homogeneous. The composition of the final reaction mixture, in terms of molar oxide ratios was:

10.0 TEAOH : $Al_2O_3$ : 5.3 $P_2O_5$ : 177 $H_2O$

A portion of the reaction mixture (275.5 grams) was sealed in a Teflon jar and was heated in an oven at 100° C for 144 hours. The liquid was decanted and the remaining solids were washed with $H_2O$ and dried in ambient air. The 5.8 grams of solid obtained were analyzed by X ray powder diffraction and found to be $AlPO_4$-18, as described in Example 46 of U.S. Patent No. 4,310,440. The decanted liquid was sealed in a Teflon jar and heated in an oven at 100° C for 45 hours. 5.0 grams of calcined $AlPO_4$-5 (prepared as described in Example 1) was added to the hot reaction mixture, mixed until homogeneous and heated at 100° C for 93 hours. The $AlPO_4$-34 product was recovered by centrifugation, washed with $H_2O$, and dried in air at ambient temperature.

A portion of the 6.5 grams of dried $AlPO_4$-34 product was analyzed and the following chemical analysis obtained:

| | Weight Percent |
|---|---|
| Carbon | 11.0 |
| Nitrogen | 1.5 |
| $Al_2O_3$ | 29.85 |
| $P_2O_5$ | 48.3 |
| LOI | 21.9 |

The above chemical analysis corresponds to a product composition in molar oxide ratios of:

0.39 TEAOH : $Al_2O_3$ : 1.16 $P_2O_5$ : 0.96 $H_2O$

which corresponds to an empirical chemical composition (anhydrous basis) of:

0.090 TEAOH : $(Al_{0.46}\ P_{0.54})\ O_2$

The X-ray powder diffraction pattern of the as-synthesized $AlPO_4$-34 product was characterized by the data in Table C.

TABLE C

| 2 Θ | d(Å) | 100I/Io |
|---|---|---|
| 9.6 | 9.19 | 100 |
| 13.1 | 6.77 | 10 |
| 14.1 | 6.26 | 10 |
| 15.5 | 5.70 | 6 |
| 16.2 | 5.47 | 23 |
| 16.9 | 5.25 | 2 |
| 18.0 | 4.93 | 14 |
| 19.2 | 4.63 | 4 |
| 20.9 | 4.25 | 40 |
| 22.2 | 4.00 | 4 |
| 22.7 | 3.92 | 3 |
| 23.3 | 3.81 | 2 |
| 25.2 | 3.54 | 16 |
| 26.3 | 3.38 | 8 |
| 28.4 | 3.14 | 3 |
| 30.5 | 2.935 | 4 |
| 30.9 | 2.893 | 22 |
| 32.1 | 2.785 | 2 |
| 33.8 | 2.653 | 2 |
| 35.0 | 2.566 | 3 |
| 36.3 | 2.475 | 2 |
| 40.1 | 2.248 | 2 |
| 43.3 | 2.089 | 2 |
| 49.5 | 1.842 | 2 |
| 51.2 | 1.784 | 3 |

A portion of the as-synthesized $AlPO_4$-34 product was subjected to a series of in-situ thermal treatments in a high temperature x-ray powder diffraction apparatus. The diffraction apparatus was adapted for control of sample temperature and environment while on the sample stage. The room temperature scan had an x-ray powder diffraction pattern essentially identical to that in Table C. The solids were heated to 500° C at 20° C/minute under $N_2$ flow and held at 500° C for 30 minutes then were cooled to room temperature under $N_2$. The x-ray powder diffraction pattern of the resulting solid at room temperature under $N_2$ is listed in Table D. After rehydration by exposure to ambient air for 2 hours, this solid gave an x-ray diffraction pattern essentially identical to the data in Table B. Subsequent dehydration by heating at 100° C for one hour under $N_2$ gave a solid which had an x-ray diffraction pattern essentially identical to the data in Table D.

TABLE D

| 2 Θ | d(Å) | 100I/Io |
|---|---|---|
| 9.4 | 9.37 | 100 |
| 12.9 | 6.87 | 34 |
| 14.0 | 6.34 | 5 |
| 16.0 | 5.53 | 25 |
| 17.8 | 4.97 | 27 |
| 19.1 | 4.66 | 4 |
| 20.7 | 4.30 | 87 |
| 22.1 | 4.02 | 7 |
| 22.5 | 3.96 | 5 |
| 23.1 | 3.85 | 10 |
| 23.9 | 3.73 | 2 |
| 25.0 | 3.56 | 40 |
| 26.0 | 3.43 | 33 |
| 27.7 | 3.22 | 7 |
| 28.2 | 3.16 | 5 |
| 29.7 | 3.01 | 5 |
| 30.7 | 2.910 | 74 |
| 31.2 | 2.871 | 39 |
| 32.5 | 2.759 | 4 |
| 33.5 | 2.673 | 6 |
| 34.6 | 2.590 | 16 |
| 36.1 | 2.485 | 13 |
| 38.8 | 2.321 | 3 |
| 39.7 | 2.270 | 62 |

Example 3

a) A reaction mixture was prepared by combining 22.9 grams of 85 wt.% orthophosphoric acid ($H_3PO_4$) and 65.4 grams of aqueous monoaluminum phosphate ($Al(H_2PO_4)_3$, 7.7 wt.% $Al_2O_3$, 33.0 wt.% $P_2O_5$), to which was added 187 grams of 39.3 wt.% aqueous tetraethylammonium hydroxide (TEAOH) and stirred until homogeneous. 5.0 grams of calcined $AlPO_4$-5 (prepared as described in Example 1) was added and shaken until homogeneous. The composition of the final reaction mixture, in terms of molar oxide ratios and excluding the $AlPO_4$-5 solids was:

10.0 TEAOH : $Al_2O_3$ : 5.0 $P_2O_5$ : 179 $H_2O$

The reaction mixture was sealed in a Teflon jar and was heated in an oven at 100° C for 242 hours. The solids were recovered by centrifugation, washed with $H_2O$, and dried in air at ambient temperature.

The 10.5 grams of dried product had an x-ray powder diffraction pattern which indicated $AlPO_4$-34 with a small amount of $AlPO_4$-5. The $AlPO_4$-34 phase had an x-ray powder diffraction pattern characterized by the data in Table E.

TABLE E

| 2 Θ | d(Å) | 100I/Io |
|---|---|---|
| 9.6 | 9.23 | 100 |
| 13.0 | 6.83 | 10 |
| 14.1 | 6.28 | 11 |
| 16.1 | 5.51 | 18 |
| 16.7 | 5.32 | 5 |
| 18.1 | 4.91 | 14 |
| 20.9 | 4.25 | 48 |
| 23.1 | 3.85 | 4 |
| 25.2 | 3.53 | 11 |
| 26.1 | 3.41 | 11 |
| 28.4 | 3.14 | 3 |
| 30.3 | 2.954 | 9 |
| 30.9 | 2.898 | 16 |
| 43.2 | 2.093 | 3 |

## Example 4

a) A reaction mixture was prepared by combining 10.6 grams of 85 wt.% orthophosphoric acid ($H_3PO_4$) and 66.2 grams of aqueous monoaluminum phosphate ($Al(H_2PO_4)_3$, 7.7 wt.% $Al_2O_3$, 33.0 wt.% $P_2O_5$), to which was added 149.5 grams of 39.3 wt.% aqueous tetraethylammonium hydroxide (TEAOH) and stirred until homogeneous. To this mixture was added 4.5 grams of calcined $AlPO_4$-5 (prepared as described in Example 1) and was shaken until homogeneous. The composition of the final reaction mixture, in terms of molar oxide ratios and excluding the $AlPO_4$-5 solids was:

8.0 TEAOH : $Al_2O_3$ : 4.0 $P_2O_5$ : 149 $H_2O$

The reaction mixture was sealed in a Teflon jar and was heated in an oven at 100° C for 192 hours. The solids were recovered by centrifugation, washed with $H_2O$, and dried in air at ambient temperature.

The 9.6 grams of dried product had an x-ray powder diffraction pattern which indicated $AlPO_4$-34 with a small amount of $AlPO_4$-5. The $AlPO_4$-34 phase had an x ray powder diffraction pattern characterized by the data in Table F.

TABLE F

| 2 Θ | d(Å) | 100I/Io |
|---|---|---|
| 9.7 | 9.15 | 100 |
| 13.1 | 6.75 | 8 |
| 14.2 | 6.24 | 11 |
| 16.1 | 5.50 | 15 |
| 18.3 | 4.84 | 16 |
| 21.0 | 4.23 | 35 |
| 23.3 | 3.81 | 3 |
| 25.5 | 3.49 | 11 |
| 26.2 | 3.40 | 10 |
| 28.5 | 3.14 | 2 |
| 30.4 | 2.945 | 7 |
| 30.9 | 2.889 | 16 |
| 32.2 | 2.783 | 3 |
| 33.6 | 2.669 | 2 |
| 34.9 | 2.571 | 3 |
| 40.3 | 2.239 | 3 |
| 49.7 | 1.834 | 2 |
| 51.1 | 1.789 | 2 |

## EXAMPLE 5

a) A reaction mixture was prepared by combining 10.6 grams of 85 wt.% orthophosphoric acid ($H_3PO_4$) and 66.2 of aqueous monoaluminum phosphate ($Al(H_2PO_4)_3$, 7.7 wt.% $Al_2O_3$, 33.0 wt.% $P_2O_5$), to which was added 149.5 grams of 39.3 wt.% aqueous tetraethylammonium hydroxide (TEAOH) and stirred until homogeneous. The composition of the final reaction mixture, in terms of molar oxide ratios was:

8.0 TEAOH : $Al_2O_3$ : 4.0 $P_2O_5$ : 149 $H_2O$

The reaction mixture was sealed in a Teflon jar and was heated in an oven at 100° C for 474 hours. The solids were recovered by centrifugation, washed with $H_2O$, and dried in air at ambient temperature.

The 4.2 grams of dried product had an x-ray powder diffraction pattern which indicated $AlPO_4$-34 with a small amount of $AlPO_4$-18. The $AlPO_4$-34 phase had an x-ray powder diffraction pattern characterized by the data in Table G.

TABLE G

| 2 Θ | d(Å) | 100I/Io |
|---|---|---|
| 9.6 | 9.18 | 100 |
| 13.1 | 6.74 | 5 |
| 14.1 | 6.28 | 10 |
| 16.1 | 5.51 | 14 |
| 18.3 | 4.86 | 16 |
| 20.9 | 4.25 | 26 |
| 22.1 | 4.02 | 2 |
| 22.6 | 3.93 | 3 |
| 23.1 | 3.85 | 3 |
| 25.5 | 3.50 | 11 |
| 26.2 | 3.40 | 6 |
| 28.3 | 3.15 | 2 |
| 30.9 | 2.897 | 16 |
| 32.3 | 2.773 | 4 |
| 34.9 | 2.571 | 2 |
| 40.0 | 2.252 | 2 |
| 49.9 | 1.826 | 3 |
| 51.1 | 1.786 | 2 |

## Example 6

a) A reaction mixture was prepared by combining 21.2 grams of 85 wt.% orthophosphoric acid ($H_3PO_4$) and 132.4 grams of aqueous monoaluminum phosphate ($Al(H_2PO_4)_3$, 7.7 wt.% $Al_2O_3$, 33.0 wt.% $P_2O_5$), to which was added 299.0 grams of 39.3 wt.% aqueous tetraethylammonium hydroxide (TEAOH) and stirred until homogeneous. To this mixture was added 0.8 grams of $AlPO_4$-34 seed crystals (prepared in Example 5) and mixed until homogeneous. The composition of the final reaction mixture, in terms of molar oxide ratios and excluding $ALPO_4$-34 solids was:

8.0 TEAOH : $Al_2O_3$ : 4.0 $P_2O_5$ : 149 $H_2O$

A portion of the reaction mixture (222.1 grams) was sealed in a Teflon jar and was heated in an oven at 100° C for 140 hours. The solids were recovered by centrifugation, washed with $H_2O$, and dried in air at ambient temperature.

The 3.6 grams of dried product had an x-ray powder diffraction pattern which indicated $ALPO_4$-34 with a smaller amount of an impurity phase. The $AlPO_4$-34 phase had an x-ray powder diffraction pattern characterized by the data in Table H.

TABLE H

| 2 Θ | d(Å) | 100I/Io |
|---|---|---|
| 9.6 | 9.17 | 100 |
| 13.1 | 6.74 | 4 |
| 14.2 | 6.26 | 9 |
| 16.0 | 5.53 | 10 |
| 18.3 | 4.84 | 16 |
| 20.9 | 4.26 | 22 |
| 22.1 | 4.02 | 3 |
| 23.2 | 3.83 | 3 |
| 25.6 | 3.48 | 11 |
| 28.4 | 3.15 | 2 |
| 30.9 | 2.897 | 14 |
| 32.4 | 2.767 | 4 |
| 34.4 | 2.610 | 2 |
| 40.1 | 2.251 | 2 |

## Example 7

A reaction mixture was prepared by combining 26.1 grams of MAP and 5.5 grams of $H_3PO_4$, to which was added 81.3 grams of an aqueous 40% (wt.) TPAOH solution and stirred until homogeneous. The composition of the final reaction mixture, in terms of molar oxide ratios was:

8.0 TPAOH : $Al_2O_3$ : 4.0 $P_2O_5$ : 189 $H_2O$

The reaction mixture was sealed in a glass jar and was heated in an oven at 100°C for 42 hours. The supernatant liquor was transferred to a Teflon-lined pressure vessel and was heated in an oven at 150°C for 65 hours. The solids were recovered by centrifugation, washed with $H_2O$ and dried at ambient temperature.

The dried product (0.5 gram) was identified as highly crystalline $AlPO_4$-5 by X-ray powder diffraction. Examination of this product by optical microscopy showed it to consist of needles of up to 50 by 20 microns in size.

## Example 8

A reaction mixture was prepared by combining 110.4 grams of MAP and 36.9 grams of $H_3PO_4$, to which was added 756.6 grams of an aqueous 22% (wt.) TPAOH solution while stirring. The mixture was stirred for an additional one hour. The composition of the final reaction mixture, in terms of molar oxide ratios was:

10.0 TPAOH : $Al_2O_3$ : 5.0 $P_2O_5$ : 444 $H_2O$

A portion of the reaction mixture (447.5 grams) was divided into four equal portions which were sealed in Teflon-lined pressure vessels and were heated in an oven at 150°C for 24 hours. The solids were recovered by centrifugation, washed with $H_2O$, and dried in air at ambient temperature.

The product (1.3 grams) was identified as $AlPO_4$-5 by X-ray powder diffraction.

## Example 9

A reaction mixture was prepared by combining 65.4 grams of MAP and 25.9 grams of $H_3PO_4$, to which was added 184.1 grams of an aqueous 40% (wt.) TEAOH solution and stirred until homogeneous. The composition of the final reaction mixture, in terms of molar oxide ratios was:

10.0 TEAOH : $Al_2O_3$ : 5.0 $P_2O_5$ : 179 $H_2O$

The reaction mixture was sealed in a Teflon jar and was allowed to stand at ambient temperature for 76 hours. The solids were recovered by centrifugation, washed with water, and dried in air at ambient temperature. About 32.3 grams of dried product was obtained.

A portion of the dried product (3.0 grams) was combined with 15.2 grams of water and was stirred until homogeneous. This mixture was sealed in a Teflon-lined pressure vessel and was heated in an oven at 150 °C for 71 hours. The solids were recovered by filtration, washed with water, and dried in air at ambient temperature.

The dried product (0.9 grams) had an X-ray powder diffraction pattern which indicated $AlPO_4$-5 with a small amount of an impurity phase.

## Example 10

A reaction mixture was prepared by combining 87.1 grams of MAP and 15.3 grams of $H_3PO_4$, to which was slowly added a solution of 59.2 grams of quinuclidine dissolved in 158.5 grams of water with stirring. The composition of the final reaction mixture, in terms of molar oxide ratios was:

8.0 quinuclidine : $Al_2O_3$ : 4.0 $P_2O_5$ : 180 $H_2O$

A portion of the reaction mixture (93.8 grams) was sealed in a Teflon-lined pressure vessel and was heated in an oven at 150 °C for 189 hours. The solids were recovered by centrifugation, washed with water, and dried in air at ambient temperature.

The of dried product (1.4 grams) had an X-ray powder diffraction pattern which indicated $AlPO_4$-17 with a smaller amount of impurity phase.

## Example 11

A reaction mixture was prepared by adding 54.3 grams of $H_3PO_4$ and 322.1 grams of an aqueous solution of 40% (wt.) TEAOH solution to 100.0 grams of MAP with stirring. The composition of the final reaction mixture, in terms of molar oxide ratios was:

11.4 TEAOH : $Al_2O_3$ : 5.86 $P_2O_5$ : 200 $H_2O$

A portion of the reaction mixture (100.5 grams) was sealed in a Teflon-lined pressure vessel and was heated in as oven at 150 °C for 65 hours. The solids were recovered by centrifugation, washed with water, and dried in air at 100 °C.

The dried product (1.8 grams) was identified as $AlPO_4$-18 by X-ray powder diffraction.

## Example 12

A reaction mixture was prepared by combining 149.5 grams of an aqueous 40% (wt.) TEAOH solution and 46.2 grams of $H_3PO_4$ and adding this solution to 2.8 grams of a pseudo-boehmite phase (73.2 wt.% $Al_2O_3$) and stirring until homogeneous. The composition of the final reaction mixture, in terms of molar oxide ratios was:

10.0 TEAOH : $Al_2O_3$ : 5.0 $P_2O_5$ : 153 $H_2O$

The reaction mixture was sealed in a Teflon-lined pressure vessel and was heated in an oven at 150 °C for 216 hours. The solids were recovered by centrifugation, washed with water, and dried in air at ambient temperature.

The dried product (1.2 grams) was identified as highly crystalline $AlPO_4$-18 by X-ray powder diffraction.

## Example 13

A reaction mixture was prepared by dissolving 2.2 grams of TMAOH in 363.2 grams of an aqueous solution of 22% (wt.) TPAOH then adding 1.5 grams of $SiO_2$ and stirring with gentle heating until dissolved.

To this mixture was added 53.0 grams of MAP and 3.9 grams of $H_3PO_4$ with stirring. The composition of the final reaction mixture, in terms of molar oxide ratios was:

10.0 TPAOH : 0.3 TMAOH : $Al_2O3$ : 0.6 $SiO_2$ : 3.5 $P_2O_5$ : 438 $H_2O$

A portion of the reaction mixture (100.4 grams) was sealed in a Teflon-lined pressure vessel and was heated in an oven at 150°C for 262 hours. The solids were recovered by centrifugation, washed with water, and dried in air at ambient temperature.

The dried product (1.0 grams) was identified as highly cystalline SAPO-20 by X-ray powder diffraction. Examination of this product by optical microscopy showed it to consist of about 10 micron twinned cubes.

## Example 14

A reaction mixture was prepared by dissolving 1.9 grams of $SiO_2$ in 59.1 grams of TMAOH and 63.0 grams of water and heating gently with stirring, then adding 65.4 grams of MAP and stirring for 2 hours. To this mixture was added 11.8 grams of TMAOH in 9.0 grams of water and stirred for 2.5 hours. Added to this mixture was 248.7 grams of water and stirred until homogeneous. The composition of the final reaction mixture, in terms of molar oxide ratios was:

12.0 TMAOH : $Al_2O_3$ : 3.08 $P_2O_5$ : 0.6 $SiO_2$ : 400 $H_2O$

A portion of the reaction mixture (109.7 grams) was sealed in a Teflon-lined pressure vessel and was heated in an oven at 150°C for 96 hours. The solids were recovered by centrifugation, washed with water, then dried in air at ambient temperature.

The dried product (3.6 grams) was identified as SAPO-20 by X-ray powder diffraction.

## Example 15

A reaction mixture was prepared by combining 65.4 grams of MAP and 25.4 grams of $H_3PO_4$, to which was added 184.1 grams of an aqueous 40% (wt.) TEAOH solution and stirred until homogeneous. Added to a 90.0 gram portion of this mixture was 0.4 grams of $Mg(OH)_2$ and stirred until homogeneous. The composition of the final reaction mixture, in terms of molar oxide ratios was:

10.0 TEAOH : $Al_2O_3$ : 5.0 $P_2O_5$ : 0.4 MgO : 179 $H_2O$

The reaction mixture was sealed in a glass jar and was heated in an oven at 100°C for 17 hours. The solids were recovered by centrifugation, washed with water, and dried in air at ambient temperature.

The dried product (2.3 grams) was identified as MAPO 34 by X-ray powder diffraction.

## Example 16

A reaction mixture was prepared by dissolving 1.7 grams of $SiO_2$ in 122.7 grams of an aqueous solution of 40% (wt.) TEAOH. This mixture was added to a solution of 43.6 grams of MAP and 17.2 grams of $H_3PO_4$ with stirring. The composition of the final reaction mixture, in terms of molar oxide ratios was:

10.0 TEAOH : $Al_2O_3$ : 5.0 $P_2O_5$ : 0.8 $SiO_2$ : 179 $H_2O$

A portion of the reaction mixture (89.7 grams) was sealed in a Teflon jar and was heated in an oven at 100°C for 169 hours. The solids were recovered by centrifugation, washed with water, and dried in air at ambient temperature.

The 1.7 grams of dried product was identified as SAPO-34 by X-ray powder diffraction.

## Example 17

A reaction mixture was prepared by dissolving 5.0 grams of cobalt acetate ($Co(OAc)_2$: 4 $H_2O$) in 25.9 grams of $H_3PO_4$ and 3.8 grams of water, then adding this solution to 65.4 grams of MAP. Added to this mixture was 184.1 grams of an aqueous solution of 40% (wt.) TEAOH with stirring. The composition of the final reaction mixture, in terms of molar oxide ratios was:

10.0 TEAOH : 0.4 CoO : $Al_2O_3$ : 5.0 $P_2O_5$ : 0.8 AcOH : 180 $H_2O$

The reaction mixture was sealed in a Teflon jar and was heated in an oven at 100° C for 48 hours. The resulting mixture was allowed to stand at ambient temperature for 67 hours then was heated in an oven at 100° C for 116 hours. The solids were recovered by centrifugation, washed with water, and dried in air at ambient temperature.

The dried product (17.7 grams) was identified as CoAPO-34 by X-ray powder diffraction.

## Example 18

A reaction mixture was prepared by dissolving 0.4 gram of TMAOH in 259.4 grams of an aqueous 22% (wt.) TPAOH solution then adding 11.7 grams of aluminum isopropoxide and stirring until dissolved. Added is 0.8 gram of $SiO_2$ and the mixture is stirred with gentle heating for 1.5 hours. Added slowly to this mixture with stirring is 19.8 grams of $H_3PO_4$. The composition of the final reaction mixture, in terms of molar oxide ratios was:

10.0 TPAOH : 0.07 TMAOH : $Al_2O_3$ : 3.0 $P_2O_5$ : 6.0 i-PrOH : 0.6 $SiO_2$ : 403 $H_2O$

To a portion of the reaction mixture (91.8 grams) was added 0.7 gram of SAPO-37 seed. This mixture was sealed in a Teflon-lined pressure vessel and was heated in an oven at 200° C for 72 hours. The solids were recovered by centrifugation, washed with water, and dried in air at ambient temperature.

The dried product (1.9 grams) was identified as SAPO-37 by X-ray powder diffraction.

## Example 19

A reaction mixture was prepared by dissolving 0.5 gram of TMAOH in 363.2 grams of an aqueous solution of 22% (wt.) TPAOH then adding 1.5 grams of $SiO_2$ and stirring with heating until dissolved. Added to this mixture was a solution of 3.9 grams of $H_3PO_4$ and 53.0 grams of MAP and was stirred with gentle heating for 3 hours. The composition of the final reaction mixture, in terms of molar oxide ratios was:

10.0 TPAOH : 0.07 TMAOH : 0.6 $SiO_2$ : $Al_2O_3$ : 3.5 $P_2O_5$ : 437 $H_2O$

A portion of the reaction mixture (98.2 grams) was sealed in a Teflon-lined pressure vessel and was heated in an oven at 150° C for 66 days then at 200° C for 92 hours. The solids were recovered by centrifugation, washed with water, and dried in air at ambient temperature.

The product (1.8 grams) was identified as SAPO-40 by X-ray powder diffraction.

## Example 20

A reaction mixture was prepared by combining 52.4 grams of MAP and 9.0 grams of $H_3PO_4$, to which was added 95.1 grams of water then 32.3 grams of dipropylamine with stirring. The composition of the final reaction mixture, in terms of molar oxide ratios was:

8.0 n-$Pr_2NH$ : $Al_2O_3$ : 4.0 $P_2O_5$ : 180 $H_2O$

A portion of the reaction mixture (100.9 grams) was sealed in a Teflon-lined pressure vessel and was heated in an oven at 150° C for 72 hours. The solids were recovered by centrifugation, washed with water, and dried in air at ambient temperature.

The dried product (3.1 grams) had an X-ray powder diffraction pattern which indicated the presence of $AlPO_4$-41 with a small amount of $AlPO_4$-11.

## Example 21

A reaction mixture was prepared by combining 130.5 grams of MAP and 22.6 grams of $H_3PO_4$, to which was added 237.4 grams of $H_2O$ then 81.0 grams of diisopropylamine with stirring. The composition of the final reaction mixture, in terms of molar oxide ratios was:

8.0 i-$Pr_2NH$ : $Al_2O_3$ : 4.0 $P_2O^5$ : 180 $H_2O$

A portion of the reaction mixture (89.8 grams) was sealed in a Teflon-lined pressure vessel and was heated in an oven at 150 °C for 170 hours. The solids were recovered by filtration, washed with water, and dried in air at ambient temperature.

The dried product 2.4 grams had an X-ray powder diffraction pattern which indicated a mixture of $AlPO_4$-41 and $AlPO_4$-11.

## Claims

1. A process for the preparation of an aluminophosphate-containing microporous crystalline composition comprising providing an aqueous solution containing reactive sources of aluminum and phosphorus and an organic templating agent in an effective concentration for structure-directing and providing the solution, the solution having an elemental ratio to water of

$MI_x:Al_y:P_z:bH_2O$

wherein MI represents one or more elements selected from the group consisting of Li, Be, B, Mg, Mn, Si, Ti, Fe, Co, Zn, Ga, Ge, V and As provided by a reactive source for that element; x is an amount of from 0 to about 0.95; y is an amount of from about 0.05 to 1.0; z is an amount of about 0.05 to 25 and b is an amount of about 20 to 1000, and maintaining the solution under hydrothermal crystallization conditions including at elevated temperatures for sufficient time to provide the crystalline product.

2. The process of claim 1 wherein the elemental ratio of P:Al is at least about 3.

3. The process of any of claims I and 2 wherein the pH of the solution is at least about 4.0, preferably at least about 4.5.

4. The process of any of claims 1 to 3 wherein the organic templating agent comprises at least one of quaternary ammonium hydroxide and alkylamine.

5. The process of any of claims 1 to 4 wherein the solution is prepared by solubilizing the aluminum source, phosphorus source and organic templating agent in water at elevated temperature and then adding additional aluminum and phosphorus sources to the solution and effecting the hydrothermal crystallization.

6. The process of claim 5 wherein the solubilizing is conducted at a temperature of betwen about 75 and 250 °C.

7. The process of any of claims 5 and 6 wherein the additional aluminum and phosphorus sources comprise microcrystalline aluminophosphate-containing composition, preferably $AlPO_4$-5.

8. The process of any of claims 1 to 7 wherein the temperature for hydrothermal crystallization is at least about 50 °C, preferably about 75 and 225 °C.

9. The process of any of claims 1 to 8 wherein about 3 to 6 moles of organic templating agent are provided per atom of reactive aluminum provided by the aluminum source.

10. The process of any of claims 1 to 9 wherein prior to adding additional aluminum and phosphorus sources to the solution, aluminophosphate-containing composition is crystallized and removed from the solution.

11. The process of claim 10 wherein the additional aluminum and phosphorus sources comprise microcrystalline aluminophosphate-containing composition.

12. The process of claim 1 wherein the aluminophosphate-containing composition is any of $AlPO_4$-5, $AlPO_4$-11, $AlPO_4$-17, $AlPO_4$-18, $AlPO_4$-41, SAPO-34, SAPO-20, SAPO-40, SAPO-37, CoAPO-34 and MAPO-34.

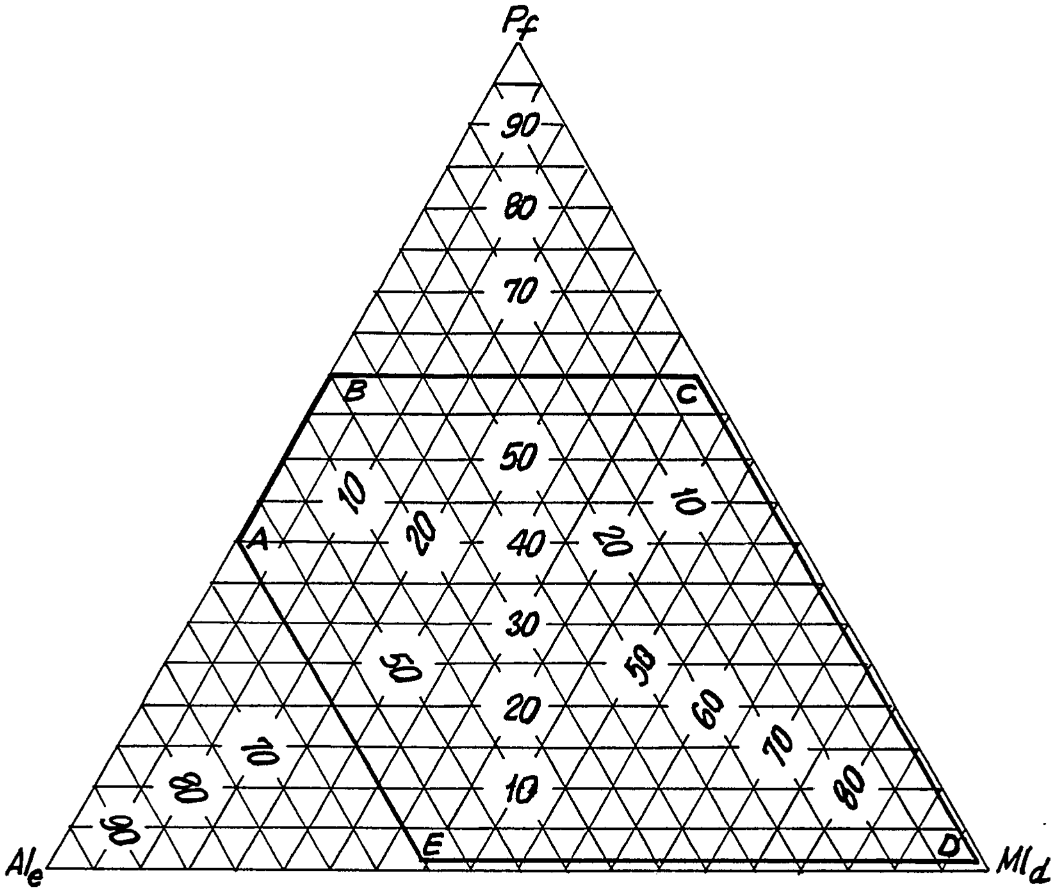
Pf
90
80
70
B
C
50
10
10
A
20
40
20
30
50
50
20
60
70
70
80
10
80
90
E
D
Ale
Mld

FIG. 1